# EUROPÄISCHE PATENTSCHRIFT

(11) **EP 2 604 534 B1**
(45) Veröffentlichungstag und Bekanntmachung des Hinweises auf die Patenterteilung: **28.09.2016**
(21) Anmeldenummer: 12007582.5
(22) Anmeldetag: 07.11.2012
(51) Int. Cl.: B65B 13/26, A22C 11/12, A22C 11/00

(54) **Fleischbindevorrichtung**
Meat binding device
Dispositif de liaison de viande

(30) Priorität: 14.12.2011 DE 202011109076 U
(43) Veröffentlichungstag der Anmeldung: 19.06.2013
(73) Patentinhaber: HERMANN WIEGAND GMBH, 36169 Rasdorf (DE)
(72) Erfinder: Lehnert, Peter, 36088 Hünfeld (DE)
(74) Vertreter: Lelgemann, Karl-Heinz

(56) Entgegenhaltungen:
- EP-A1- 2 191 725
- DE-C1- 4 425 233
- DE-U1- 8 906 233
- DE-U1- 29 600 705

## Beschreibung

Die Erfindung bezieht sich auf eine Fleischbindevorrichtung mit einer Fleischröhre, in die ein Fleischstück einführbar ist, einem Umschlingungsrad, mittels dem das in der Fleischröhre befindliche Fleischstück mit einem von einer Fadenspeichervorrichtung abrollbaren Faden umschlingbar ist, und einem Fadenverknotungs- und -abschneideaggregat, mittels dem der um das Fleischstück geschlungene Faden verknot- und abschneidbar ist, vgl. die Druckschriften DE-U-8906233 und EP-A-2191725.

Bei bekannten derartigen Fleischbindevorrichtungen ist das Fadenverknotungs- und -abschneideaggregat üblicherweise in Vertikalrichtung unterhalb der Fleischröhre bzw. des Umschlingungsrads angeordnet. Dies hat zur Folge, dass bei der Bearbeitung des Fleischstücks aus diesem austretende Flüssigkeiten, wie Fett ud. dgl., sowie vom Fleischstück abgetrennte Fleischteile auf das Fadenverknotungs- und - abschneideaggregat geraten und dort verbleiben. Darüber hinaus fallen derartige Flüssigkeiten, Fette und Fleischstücke auch vorbei am Fadenverknotungs- und -abschneideaggregat in den unterhalb desselben angeordneten Bereich eines Gehäuses der Fleischbindevorrichtung.

Zum einen resultieren hieraus hygienische Probleme, wobei darüber hinaus auch Störungen hinsichtlich des Betriebs der Fadenverknotungs- und -abschneideaggregate entstehen können.

Ausgehend von dem vorstehend geschilderten Stand der Technik liegt der Erfindung die Aufgabe zugrunde, eine gattungsgemäße Fleischbindevorrichtung zur Verfügung zu stellen, bei der aufgrund von aus dem zu bearbeitenden Fleischstück austretenden Flüssigkeiten, Fetten etc., und aufgrund von vom zu bearbeitenden Fleischstück abgetrennten Fleischteilen einerseits keine hygienischen Probleme entstehen und andererseits der Betrieb des Fadenverknotungs- und -abschneideaggregats der Fleischbindevorrichtung nicht beeinträchtigt wird.

Diese Aufgabe wird erfindungsgemäß dadurch gelöst, dass das Fadenverknotungs- und -abschneideaggregat seitlich zu einer Seitenwand versetzt in Bezug auf die Fleischröhre und das Umschlingungsrad in einem Gehäuse der Fleischbindevorrichtung angeordnet ist. Dadurch, dass das Fadenverknotungs- und - abschneideaggregat nunmehr von aus dem zu bearbeitenden Fleischstück austretenden Flüssigkeiten, Fetten etc. sowie von dem zu bearbeitenden Fleischstück abgetrennten Fleischteilen nicht mehr beaufschlagt wird, ergibt sich ein im Vergleich zum Stand der Technik störungsfreierer Betrieb des Fadenverknotungs- und -abschneideaggregats.

Vorteilhaft ist das Fadenverknotungs- und -abschneideaggregat neben und etwa in einem Vertikalbereich mit der Fleischröhre und dem Umschlingungsrad angeordnet.

Gemäß einer vorteilhaften Ausführungsform der erfindungsgemäßen Fleischbindevorrichtung ist das Fadenverknotungs- und -abschneideaggregat in Vertikalrichtung etwa senkrecht oberhalb seiner Antriebseinheit angeordnet, wobei ein Eingangszahnrad des Fadenverknotungs- und -abschneideaggregats über eine Antriebskette mit einem Antriebsritzel der Antriebseinheit in Antriebsverbindung steht und die Antriebskette mittels einer Kettenspannvorrichtung vorspannbar ist. So ist es möglich, die Antriebseinheit des Fadenverknotungs- und - abschneideaggregats in Vertikalrichtung nahezu exakt unterhalb des Fadenverknotungs- und -abschneideaggregats anzuordnen, wobei darüber hinaus mittels der Kettenspannvorrichtung eine zuverlässige Antriebsverbindung zwischen dem Fadenverknotungs- und -abschneideaggregat einerseits und dessen Antriebseinheit andererseits gewährleistet ist.

Um sicherzustellen, dass auch langfristig keine hygienischen Beeinträchtigungen beim Betrieb der Fleischbindevorrichtung auftreten, ist es vorteilhaft, wenn unterhalb der Fleischröhre bzw. unterhalb des Umschlingungsrads eine Auffangwanne angeordnet ist, mittels der aus dem Fleischstück austretende Flüssigkeiten, wie Fette etc., und vom Fleischstück abgetrennte Fleischteile aufgefangen werden können.

Zur Erleichterung von Reinigungsmaßnahmen ist es darüber hinaus zweckmäßig, wenn die Auffangwanne von einer Seitenwand des Gehäuses der Fleischbindevorrichtung her in das Gehäuse einschiebbar und aus dem Gehäuse herausziehbar ist. Im herausgezogenen Zustand kann die Auffangwanne dann mit einem vergleichsweise geringen Aufwand gereinigt werden.

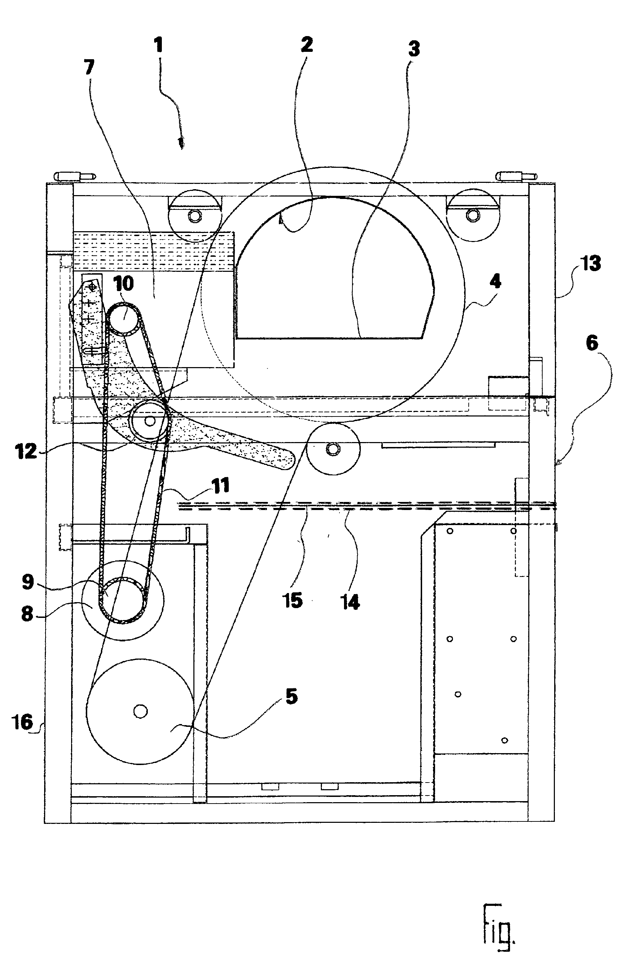

Im Folgenden wird die Erfindung anhand einer Ausführungsform unter Bezugnahme auf die Zeichnung näher erläutert, deren einzige Figur eine Ausführungsform einer erfindungsgemäßen Fleischbindevorrichtung zeigt.

Eine in der einzigen Figur dargestellte Ausführungsform einer erfindungsgemäßen Fleischbindevorrichtung 1 dient dazu, Fleischstücke mit einem in der Figur nicht dargestellten Faden einzubinden. Hierzu weist die Fleischbindevorrichtung eine Fleischröhre 2 auf, die im oberen Bereich der Fleischbindevorrichtung 1 angeordnet ist und die eine im Wesentlichen waagerechte Ablagefläche 3 hat, auf die das einzubindende Fleischstück abgelegt werden kann. Die Fleischröhre 3 und damit ein auf deren Ablagefläche 3 abgelegtes Fleischstück ist umgeben von einem Umschlingungsrad, welches von einer in der Figur nicht dargestellten Fadenspeichervorrichtung der Fleischbindevorrichtung 1 mit einem Faden versorgt wird. Mittels dieses Fadens umschlingt das Umschlingungsrad 4 das auf der Ablagefläche 3 der Fleischröhre 2 abgelegte Fleischstück.

Das Umschlingungsrad 4 wird mittels einer Antriebseinheit 5, die in einem Gehäuse 6 der Fleischbindevorrichtung 1 - im dargestellten Ausführungsbeispiel im unteren linken Bereich des Gehäuses 6 - angeordnet ist. Mittels der Antriebseinheit 5 ist das Umschlingungsrad 4 rotierbar, wobei mittels des Umschlingungsrads 4 bei dessen Umdrehung das auf der Ablagefläche 3 der Fleischröhre 2 befindliche Fleischstück mit dem in der Figur nicht dargestellten Faden umschlungen wird.

Wenn das Fleischstück mittels des Umschlingungsrads 4 mit dem vorstehend erwähnten Faden umschlungen ist, muss dieser Faden verknotet und abgeschnitten werden. Hierzu dient ein Fadenverknotungs- und -abschneideaggregat 7, welches im in der einzigen Figur dargestellten Ausführungsbeispiel der Fleischbindevorrichtung 1 unmittelbar neben und im etwa gleichen Vertikalniveau wie die Fleischröhre 2 bzw. das Umschlingungsrad 4 der Fleischbindevorrichtung angeordnet ist. Das Fadenverknotungs- und -abschneideaggregat 7 wird bei dem in der einzigen Figur gezeigten Ausführungsbeispiel der Fleischbindevorrichtung 1 mittels einer Antriebseinheit 8 angetrieben, die im dargestellten Ausführungsbeispiel mit einem vergleichsweise geringen Vertikalabstand oberhalb der Antriebseinheit 5 des Umschlingungsrads 4 sitzt.

Die Antriebseinheit 8 hat ein Ausgangsritzel 9, welches in Vertikalrichtung etwa senkrecht unterhalb eines Eingangszahnrads 10 des Fadenverknotungs- und -abschneideaggregats 7 angeordnet ist. Das Ausgangsritzel 9 der Antriebseinheit 8 steht mittels einer Antriebskette 11 in Antriebsverbindung mit dem Eingangszahnrad 10 des Fadenverknotungs- und - abschneideaggregats 7.

Um bei der senkrechten Untereinanderanordnung von Eingangszahnrad 10 des Fadenverknotungs- und -abschneideaggregats 7 einerseits und Ausgangsritzel 9 der Antriebseinheit 8 andererseits sicherzustellen, dass eine zuverlässige Antriebsverbindung zwischen Ausgangsritzel 9 und Eingangszahnrad 10 vorliegt, ist im Falle der in der einzigen Figur gezeigten Fleischbindevorrichtung 1 eine Kettenspannvorrichtung 12 vorgesehen, mittels der die Antriebskette 11 vorgespannt wird.

Die in der einzigen Figur gezeigte Ausführungsform der erfindungsgemäßen Fleischbindevorrichtung 1 ist mit einer zu einer in der einzigen Figur rechten Seitenwand 13 geöffneten Führung 14 versehen, in die eine Auffangwanne 15 einschiebbar und aus der die Auffangwanne 15 durch eine Öffnung in der Seitenwand 13 herausziehbar ist. Mittels der Auffangwanne 15 wird verhindert, dass aus dem Fleischstück austretende Flüssigkeiten, Fett, vom Fleischstück abgetrennte Fleischstücke etc. in den unteren Bereich des Gehäuses 6 fallen und sich dort ansammeln. Die Auffangwanne 15 kann in regelmäßigen Zeitabständen herausgezogen und gereinigt werden. Die Auffangwanne 15 erstreckt sich im dargestellten Ausführungsbeispiel bis zu einem Bereich des Gehäuses 6, der zwischen dem in der einzigen Figur linken seitlichen Ende der Fleischröhre 2 und der der Seitenwand 13 des Gehäuses 6 gegenüberliegenden Seitenwand 16 des Gehäuses 6 angeordnet ist. Die Führung ist in geeigneter Weise innerhalb des Gehäuses 6 angebracht.

## Patentansprüche

1. Fleischbindevorrichtung, mit einer Fleischröhre (2), in die ein Fleischstück einführbar ist, einem Umschlingungsrad (4), mittels dem das in der Fleischröhre (2) befindliche Fleischstück mit einem von einer Fadenspeichervorrichtung abrollbaren Faden umschlingbar ist, und einem Fadenverknotungs- und -abschneideaggregat (7), mittels dem der um das Fleischstück geschlungene Faden verknot- und abschneidbar ist, **dadurch gekennzeichnet, dass** das Fadenverknotungs- und -abschneideaggregat (7) seitlich zu einer Seitenwand (16) versetzt in Bezug auf die Fleischröhre (2) und das Umschlingungsrad (4) in einem Gehäuse (6) der Fleischbindevorrichtung (1) angeordnet ist.

2. Fleischbindevorrichtung nach Anspruch 1, bei der das Fadenverknotungs- und -abschneideaggregat (7) neben und etwa in einem Vertikalbereich mit der Fleischröhre (2) und dem Umschlingungsrad (4) angeordnet ist.

3. Fleischbindevorrichtung nach Anspruch 1 oder 2, bei der das Fadenverknotungs- und -abschneideaggregat (7) in Vertikalrichtung etwa senkrecht oberhalb seiner Antriebseinheit (8) angeordnet ist, ein Eingangszahnrad (10) des Fadenverknotungs- und -abschneideaggregats (7) über eine Antriebskette (11) mit einem Ausgangsritzel (9) der Antriebseinheit (8) in Antriebsverbindung steht und die Antriebskette (11) mittels einer Kettenspannvorrichtung (12) vorspannbar ist.

4. Fleischbindevorrichtung nach einem der Ansprüche 1 bis 3, bei der unterhalb der Fleischröhre (2) bzw. unterhalb des Umschlingungsrads (4) eine Auffangwanne (15) angeordnet ist.

5. Fleischbindevorrichtung nach Anspruch 4, deren Auffangwanne (15) von einer Seitenwand (13) des Gehäuses (6) der Fleischbindevorrichtung (1) her in das Gehäuse (6) einschiebbar und aus dem Gehäuse (6) herausziehbar ist.

## Claims

1. A meat binding device having a meat tube (2) into which a piece of meat can be introduced, a wrapping wheel (4) by means of which the piece of meat located in the meat tube (2) can be wrapped using a thread that can be unrolled from a thread storage device and a thread knotting and cutting assembly (7) by means of which the thread wrapped around the piece of meat can be knotted and cut to length, **characterized in that** the thread knotting and cutting assembly (7) is laterally offset to a side wall (16) in respect to the meat tube (2) and the wrapping wheel (4) in a housing (6) of the meat binding device (1).

2. The meat binding device according to claim 1, in which the thread knotting and cutting assembly (7) is arranged adjacent to and approximately in a vertical region with the meat tube (2) and the wrapping wheel (4).

3. The meat binding device according to claim 1 or 2, in which the thread knotting and cutting assembly (7) is arranged in a vertical direction roughly perpendicularly above its drive unit (8), an input gear wheel (10) of the thread knotting and cutting assembly (7) is in drive connection with an output pinion (9) of the drive unit (8) via a drive chain (11) and the drive chain (11) can be pretensioned by means of a chain tensioning device (12).

4. The meat binding device according to one of claims 1 to 3, in which a collecting tray (15) is arranged below the meat tube (2) or else below the wrapping wheel (4).

5. The meat binding device according to claim 4, the collecting tray (15) whereof can be pushed into the housing (6) and removed from the housing (6) from a side wall (13) of the housing (6) of the meat binding device (1).

## Revendications

1. Dispositif de nouage de viande, avec un tube pour viande (2) dans lequel un morceau de viande peut être introduit, une roue d'enroulement (4) au moyen de laquelle le morceau de viande se trouvant dans le tube pour viande (2) peut être enserré par un fil pouvant être déroulé à partir d'un dispositif de stockage de fil, et avec un ensemble de nouage et de coupure de fil (7) au moyen duquel le fil enroulé autour du morceau de viande peut être noué et coupé, **caractérisé en ce que** l'ensemble de nouage et de coupure de fil (7) est disposé latéralement à une paroi latérale (16) de manière décalée par rapport au tube pour viande (2) et à la roue d'enroulement (4) dans un boîtier (6) du dispositif de nouage de viande (1).

2. Dispositif de nouage de viande selon la revendication 1, dans lequel l'ensemble de nouage et de coupure de fil (7) est disposé à côté du tube pour viande (2) et de la roue d'enroulement (4) et environ dans une zone verticale avec ceux-ci.

3. Dispositif de nouage de viande selon la revendication 1 ou 2, dans lequel l'ensemble de nouage et de coupure de fil (7) est disposé en direction verticale à peu près perpendiculairement au-dessus de son unité d'entraînement (8), une roue dentée d'entrée (10) de l'ensemble de nouage et coupure de fil (7) étant en liaison d'entraînement via une chaîne d'entraînement (11) avec un pignon de sortie (9) de l'unité d'entraînement (8), et la chaîne d'entraînement (11) étant précontrainte au moyen d'un dispositif tendeur de chaîne (12).

4. Dispositif de nouage de viande selon l'une des revendications 1 à 3, dans lequel un bac de collecte (15) est disposé sous le tube pour viande (2) ou sous la roue d'enroulement (4).

5. Dispositif de nouage de viande selon la revendication 4, dont le bac de collecte (15) peut être rentré dans le boîtier (6) à partir d'une paroi latérale (13) du boîtier (6) du dispositif de nouage de viande (1) et être sorti du boîtier (6).
